# EUROPÄISCHE PATENTANMELDUNG

(11) **EP 1 483 969 A1**
(43) Veröffentlichungstag der Anmeldung: **08.12.2004**
(21) Anmeldenummer: 04076620.6
(22) Anmeldetag: 02.06.2004
(51) Int. Cl.: A21D 13/08

(54) **Cracker mit teilchenförmigem Belag aus Lebensmitteln**

(30) Priorität: 06.06.2003 DE 20308902 U
(71) Anmelder: UNILEVER N.V., 3013 AL Rotterdam (NL); UNILEVER PLC, London EC4P 4BQ (GB)
(72) Erfinder: Etzelsdorfer, Rainer, c/o Unilever Bestfoods, 91522 Ansbach (DE); Miehling, Rainer, c/o Unilever Bestfoods, 91522 Ansbach (DE); Schneider, Michael, c/o Unilever Bestfoods, 91522 Ansbach (DE)
(74) Vertreter: Wurfbain, Gilles L.

(57) **Zusammenfassung**

Beschrieben wird ein Cracker mit teilchenförmigem Belag aus Lebensmitteln, der gekennzeichnet ist durch: eine Cracker-Basis, gebildet aus einem hefegelockerten Teig, einen Gesamtwassergehalt von weniger als etwa 20 Gew.-%, insbesondere weniger als etwa 10 Gew.-%, gemessen nach § 35 Lebensmittelbedarfsgütergesetz 06.00-3, einen A_{w}-Wert von kleiner als etwa 0,85, gemessen nach § 35 Lebensmittelbedarfsgütergesetz 06.00-2, einen kleinstückigen Belag aus Käse, Fleischerzeugnissen und/oder Gemüse und eine Bindeschicht auf der Belagseite, gebildet aus gequollenen Kohlenhydraten und/oder gequollenen Derivaten hiervon. Dieser Cracker lässt sich insbesondere nach einem Verfahren herstellen, bei dem ein Teigling aus einem hefegelockerten Teig geformt wird, dieser Teigling einer Stückgare unterzogen, der gegarte Teigling gebacken, die Belagseite der erhaltenen Cracker-Basis, gegebenenfalls nach Abkühlen, mit einer Bindeschicht für einen kleinstückigen Belag aus Käse, Fleischerzeugnissen und/oder Gemüse ausgebildet, der kleinstückige Belag aufgebracht und das Zwischenerzeugnis mit Cracker-Basis und kleinstückigem Belag einer Hitzebehandlung unterzogen wird, um in dem Fertigerzeugnis den Gesamtwassergehalt auf weniger als etwa 20 Gew.-%, gemessen nach § 35 Lebensmittelbedarfsgütergesetz 06.00-3, und den A_{w}-Wert auf weniger als etwa 0,85, gemessen nach § 35 Lebensmittelbedarfsgütergesetz 06.00-2, einzustellen. Der erhaltene Cracker zeigt optimale organoleptische Eigenschaften und gute Haltbarkeit. Er ist einfach herstellbar und geschmacklich wünschenswert modifizierbar.

## Beschreibung

Die Erfindung betrifft einen Cracker mit einem teilchenförmigen Belag aus Lebensmitteln, insbesondere aus Käse, Fleischerzeugnissen und/oder Gemüse.

Cracker (Kräcker) sind ein keksähnliches Flachgebäck in Form einer kleinstückigen oder mäßig großen fetthaltigen Dauerbackware, die aufgrund von Walz- und Faltvorgängen bei der Bearbeitung des Hefeteiges auch blättrige Beschaffenheit aufweisen können. Der Cracker-Teig wird unter Zusatz von z. B. Käse, Paprika oder Salz hergestellt. Mit Salz bestreute Cracker werden auch als Saltines bezeichnet. Cracker haben als Imbisserzeugnisse große Verbreitung gefunden. Als vorwiegend nicht süßes Gebäck werden Cracker unterschiedlicher Formen mit verschiedenen Zutaten (z.B. Kümmel, Mohn, Sesam, Weizenkleie) hergestellt und weisen in den einzelnen Ländern unterschiedliche Beschaffenheit auf. Ihre Backzeit beträgt im allgemeinen 3 bis 6 Minuten, während der Feuchtigkeitsgehalt in der Regel zwischen 3 und 4 Gew.-% liegt. In Westeuropa werden Cracker mit ausgeprägtem Geschmack bevorzugt, der durch eine verlängerte Backzeit von im allgemeinen etwa 8 bis 9 Minuten erzielt wird. Diese Cracker weisen einen Feuchtigkeitsgehalt von nur etwa 1 bis 2 %.

Im allgemeinen werden Cracker aus einem Hefeteig hergestellt. Es handelt sich um einen insbesondere aus Weizenmehl, Zugußflüssigkeit, Hefe sowie gegebenenfalls Zutaten hergestellten, relativ zähen gelockerten Teig. In der DE 691 17 162 T2 wird festgestellt, dass die herkömmlichen Cracker nicht sonderlich beliebt sind, da der Kunde sie gewöhnlich für geschmacksarm hält. Daher hätten derartige Cracker nie die gleiche Akzeptanz wie echtes Brot gefunden. Es wird daher ein Verfahren vorgeschlagen, um hier eine Verbesserung zu erreichen, insbesondere im Hinblick auf die organoleptischen Eigenschaften. Dies wird mit einem Cracker aus einem Teig erreicht, der auf eine wässrige Suspension einer Mischung aus Mehl und Hefe sowie eine fermentierte Mischung aus Mehl und Hefe zurückgeht. Der Teig wird bei Umgebungstemperatur bei relativ hoher Feuchtigkeit kurzzeitig fermentiert. Hieraus werden auf herkömmliche Weise Cracker-Vorformlinge herstellt. Die Cracker-Vorformlinge werden einem Schnellbackvorgang unterworfen, um deren kontrolliertes Schwellen zu fördern. In einem Mikrowellenofen wird der Backvorgang abgeschlossen.

Es sind auch Cracker mit einem Belag bekannt. So weist ein Cracker der Firma Wasa eine cremige Käseschicht auf. Das deutsche Gebrauchsmuster 89 10 283.5 spricht von einer "Müsli-Schnitte", bei der eine brotartige Schnitte mit einem Belag versehen ist, wobei der Belag auf der Basis von "Müsli" ausgebildet und durch eine Zwischenschicht auf der Oberfläche der brotartigen Schnitte gehalten ist. Detaillierte Ausführungen über die Art der Zwischenschicht werden nicht gemacht.

Die DE 37 16 456 A1 befasst sich u.a. mit dem Aufbringen einer Belagschicht auf eine andere Schicht eines Gebäckes, insbesondere auf einen Teigboden, durch über den Rand hinausgehendes Schütten der die Schicht bildenden Masse. Die Masse wird auf einen Zwischenträger mit dem gewünschten Umriß der Belagschicht und einer haftungsarmen Oberfläche geschüttet, gefroren und in gefrorenem Zustand von dem Zwischenträger abgenommen und auf die andere Schicht des Gebäcks aufgelegt. Dieses Verfahren dient der Vorfertigung von Pizzen als Tiefkühlprodukt.

Der Erfindung liegt die Aufgabe zugrunde, einen Cracker vorzuschlagen, der von den Kunden bezüglich seiner organoleptischen Eigenschaften umfänglich angenommen wird, eine gute Haltbarkeit zeigt, einfach herstellbar ist und geschmacklich wünschenswert modifiziert eingestellt werden kann. Darüber hinaus soll die Erfindung ein Verfahren vorschlagen, mit dem ein derartiger Cracker besonders einfach und wirtschaftlich herstellbar ist.

Erfindungsgemäß wird diese Aufgabe durch einen Cracker mit einem teilchenförmigen Belag aus Lebensmitteln gelöst, der gekennzeichnet ist durch a) eine Cracker-Basis, gebildet aus einem hefegelockerten Teig, b) einen Gesamtwassergehalt von weniger als etwa 20 Gew.-%, insbesondere weniger als etwa 10 Gew.-%, gemessen nach § 35 Lebensmittelbedarfsgütergesetz 06.00-3, c) einen A_{w}-Wert von kleiner als etwa 0,85, gemessen nach § 35 Lebensmittelbedarfsgütergesetz 06.00-2, d) einen kleinstückigen Belag aus Käse, Fleischerzeugnissen und/oder Gemüse und e) eine Bindeschicht auf der Belagseite, gebildet aus gequollenen Kohlenhydraten und/oder Derivaten hiervon.

Vorzugsweise beruht der hefegelockerte Teig auf Getreidemehl, wobei es sich um Mehl von insbesondere Gerste, Hafer, Reis und/oder Mais handeln kann. Weizenmehl wird bevorzugt. Es ist bevorzugt, wenn der Teig folgende Zusammensetzung aufweist: Etwa 40 bis 65 Gew.-% Getreidemehl, etwa 0,5 bis 10 Gew.-% Hefe, etwa 5 bis 20 Gew.-% Backmargarine sowie Rest Wasser, Salze, wie insbesondere Kochsalz und Backmittel, wie insbesondere solche mit einem Gehalt an einem Emulgator. Ganz besonders wird es bevorzugt, dass der zur Ausbildung der Cracker-Basis herangezogene hefegelockerte Teig folgende Zusammensetzung aufweist: Etwa 45 bis 60 Gew.-%, insbesondere etwa 47 bis 53 Gew.-% Getreidemehl, etwa 2 bis 8 Gew.-%, insbesondere 3 bis 5 Gew.-% Hefe, etwa 7 bis 18 Gew.-%, insbesondere etwa 9 bis 14 Gew.-% Backmargarine.

Bei der Art der Backmargarine unterliegt die Erfindung keiner wesentlichen Einschränkung. Es wird bevorzugt, wenn diese mindestens 6 Gew.-% Mono- und Diglyceride enthält.

Der Cracker-Basis können zur Einstellung eines herzhaften Geschmacks verschiedene Würzmittel einverleibt werden. Dabei kann es sich um übliche Gewürze, Würzstoffe, Würzkonzentrate, Gewürzmischungen und/oder Gewürzzubereitungen handeln. Vorzugsweise werden einverleibt Salze, Muskat, Knoblauch, Pfeffer, Koreander, Paprikapulver und/oder Rosmarinextrakte. Diese Aufzählung ist nur beispielhaft. Mit den Würzmitteln soll insbesondere der Geschmack der Cracker-Basis gezielt eingestellt werden.

Die Größe der Cracker-Basis bzw. deren Durchmesser ist nicht wesentlich. Er liegt in der Regel in dem Bereich von etwa 10 bis 16 mm. Von Vorteil ist es, wenn die Cracker-Basis eine Stärke von 1 bis 8 mm, insbesondere etwa 2 bis 5 mm aufweist. Wird die Größe von etwa 1 mm unterschritten, dann hat die Cracker-Basis regelmäßig nicht die wünschenswerte Bruchfestigkeit, während ein Überschreiten der Stärke von 8 mm im allgemeinen unerwünscht ist, weil das Mundgefühl und der typische Abbiß nicht zufrieden stellen.

Vorteilhaft ist es ferner, wenn die Cracker-Basis oberflächlich gelaugt ist. Dadurch erhält sie die Charakteristik eines Laugendauergebäcks. Hierbei kann der aus Getreidemehl, insbesondere Weizenmehl, vorgeformte hefegelockerte Teig vor dem Backen in eine niedrigkonzentrierte Natronlauge getaucht wird. Die Lauge führt bei 85 bis 88°C zur Ausbildung der typischen, glatten braunen Oberfläche beim Backprozess. Dies verleiht der späteren ausgebackenen Cracker-Basis eine charakteristische Farbe und eine typische geschmackliche Beschaffenheit.

Besonders Kennzeichen des erfindungsgemäßen Crackers ist es, dass er keinen pulvrigen oder ähnlich kleinteiligen Belag aufweisen muss, sondern sich auf seiner Oberfläche ein kleinstückiger Belag findet, der aus Käse, Fleischerzeugnissen und/oder Gemüse bestehen kann. Dabei liegt der Käse vorzugsweise als Hart- und/oder Schnittkäse vor. Hartkäse zeichnet sich durch eine feste Konsistenz mit geringem Wassergehalt (Trockenmasse mindestens 60 Gew.-%), durch gleichmäßige Durchreifung der ganzen Masse und lange Haltbarkeit aus. Zu den bekannten Sorten zählen beispielsweise Chester, Bergkäse, Cheddar und Emmentalerkäse. Schnittkäse ist die Bezeichnung für eine Gruppe schnittfester oder halbfester im Trockenmassegehalt zwischen Hart- und Weichkäse liegender Käsesorten. Hierzu zählen feste Schnittkäse (mit fester, schnittfähiger Konsistenz), wie Gauda, Edamer, Tollenser und Stralsunder Käse, halbfeste Schnittkäse (mit mittelfester, schnittfähiger Konsistenz), wie Edelpilzkäse, Münster Käse und Butterkäse. Es kommt bei dem Käse nicht auf die Zuordnung zu Hart- bzw. Schnittkäse an, sondern allein darauf, dass der Käse, der sich kleinstückig auf der Cracker-Basis befindet, eine vergleichbare Härte und/oder Schneidbarkeit aufweist. Somit können auch Käsesorten, die von Haus aus einen höheren Wassergehalt aufweisen, vor Aufbringen auf die Cracker-Basis auf einen niedrigeren Wassergehalt getrocknet, eingesetzt werden. In Einzelfällen kann dies auch, wenn der Gesamtwassergehalt nicht zu hoch ist, unmittelbar während des Backprozesses erfolgen, um die noch später anzusprechenden erfindungsgemäßen Rahmenbedingungen für den Wassergehalt einzuhalten.

Anstelle oder in Vermischung mit den kleinstückigen Käseteilchen können auch Fleischerzeugnisse und/oder Gemüse mit Vorteil herangezogen werden. Die Fleischerzeugnisse liegen vorzugsweise in Form von Rohpökelwaren oder Dauerwurst vor.

Rohpökelwaren sind nach den Leitsätzen für Fleischerzeugnisse durch Pökeln oder Salzen haltbar gemachte rohe, abgetrocknete, geräucherte oder ungeräucherte Fleischstücke von stabiler Farbe, typischem Geruch (Pökelaroma) und von einer Konsistenz, die das anfertigen dünner Schnitte ermöglicht. Rohpökelwaren werden untergliedert nach Zuschnittformen: Rohschinken als geschlossener Schinken (Knochenschinken), Flachschinken (Spalt-, Kern-, Rollschinken) und Teilstückschinken (Schinkenspeck, Nuß- und Lachsschinken, Rinderrauchfleisch). Sonstige Rohpökelwaren, die nicht aus Schinken stammen, sind z.B. Speck, Bauchspeck, Räuchernacken und gepökelte Gänsebrust. Bei Rohschinken wird der Wassergehalt im weichsten (zentralen) Magerfleischanteil (Abtrocknungsgrad) limitiert. Bei der Dauerwurst kann es sich um eine Rohwurst-Dauerware handeln, die hart und ausgereift ist, oder auch um eine Rohwurst-Hartdauerware, die noch schnittfest ist. Zu den Rohwurst-Dauerwaren, die halb ausgereift sind, zählen insbesondere Berliner Mettwurst, Heidecker Bauernsalami, Katenrauchwurst, Rindfleischknackwurst, Salami, Schinkenwurst, Cervelatwurst, Schinkenblockwurst, Mettwurst, grobe Westfälische Wurst, rohe Knoblauchwurst, rohe Krakauer, Landjäger, Polnische Knacker, Berliner Knacker, Bauernbratwurst und rohe Debreziener. Zu der Rohwurst-Halbdauerware, zählen insbesondere die Berliner Mettwurst, Katenrauchwurst, Blockwurst, Salami, Schinken Polnische, Schinkenwurst und Cervelatwurst. Wenn in Einzelfällen eine Wurst nicht unmittelbar diesen Begriffen unterzuordnen ist, so kann dies unbedeutend sein. So lassen sich grundsätzlich Wurstwaren einsetzen, die die erforderliche Festigkeit entweder dadurch erlangt haben, indem sie einem Vortrocknungsprozeß unterworfen wurden oder im Verlaufe der Herstellung des erfindungsgemäßen Crackers der Wassergehaltes so weit herabgesetzt wird, dass die Rahmenbedingungen für den Gesamtwassergehalt eingehalten werden.

Entsprechendes gilt für Gemüseteilchen, die einen zu hohen Wassergehalt haben. In einem solchen Fall ist es von Vorteil, vorgetrocknete Gemüseteilchen einzusetzen. Wenn von "Gemüse" im Rahmen der Erfindung gesprochen wird, dann zählen hierzu auch Pilze, insbesondere in Form von Champignons. Vorzugsweise liegt das Gemüse, wenn es allein oder als Teil des kleinstückigen Belags der Cracker-Basis herangezogen wird, vor als Wurzelgemüse, wie Rettich, Rote Bete, Sellerie, Schwarzwurzel, Kohlrabi oder Mehrrettich, als Knollengemüse, wie Kartoffeln, Knollensellerie, Kohlrabi als Blattgemüse, wie Spinat, Mangold, Grünkohl, Kohlrabiblätter, Feldsalat, Endiviensalat, Sauerampfer und Brennesseln, als Stengelgemüse, insbesondere Spargel und Chicorée, als Zwiebelgemüse, wie Zwiebeln, Lauch und Knoblauch, als Fruchtgemüse, wie Gurken, Tomaten, Kürbis und Gemüsepaprika. Es kommen aber auch vielfältige andere Gemüsearten in Frage, wobei es allein wichtig ist, dass, wenn der ursprüngliche Wassergehalt zu hoch ist, dieser entweder durch Vortrocknen oder während der abschließenden Backmaßnahme so weit reduziert wird, dass die Rahmenbedingungen des Wassergehaltes des erfindungsgemäßen Crackers eingehalten sind.

Ein besonderes Kundeninteresse wird befriedigt, wenn der kleinstückige Belag im wesentlichen aus einer Mischung aus Käse, insbesondere in Form von Hartkäse, und Fleischerzeugnissen, insbesondere in Form von Salami und/oder Schinkenstücken, besteht, wobei vorzugsweise 1 Gew.-Teil Käse auf etwa 0,5 bis 1 Gew.-Teil Fleischerzeugnis entfällt.

In Einzelfällen ist es erwünscht, dass der kleinstückige Belag gewürzt ist, so insbesondere mit Salz, Muskat, Knoblauch, Pfeffer, Koreander, Paprikapulver und/oder Rosmarinextrakt. Dabei kann der kleinstückige Belag des Fertigerzeugnisses mit einer entsprechenden Gewürzmischung beschüttet werden. Er kann aber bereits in sich das Würzmittel enthalten haben. Darüber hinaus kann ein Würzen der Cracker-Basis auch vor Aufbringen des kleinstückigen Belages erfolgen, dies, entweder im Verlaufe der Herstellung der Cracker-Basis, aber auch durch nachträgliches Aufbringen der Gewürzmischung auf die Oberfläche der Cracker-Basis und anschließendes Aufbringen des kleinstückigen Belags.

Die Menge des kleinstückigen Belags auf der Oberfläche der Cracker-Basis ist nicht kritisch. Es wird bevorzugt, wenn der kleinstückige Belag in einer Menge von etwa 0,2 bis 6 g/cm², insbesondere 0,3 bis 4 g/cm² vorliegt. Ein Unterschreiten der Menge von etwa 0,2 g/cm² führt dazu, dass Produkt geschmacklich nicht mehr zufriedenstellt, während eine Menge von mehr als 6 g/cm² bedeutet, dass der wünschenswerte Eindruck eines Crackers nicht mehr gegeben ist.

Um den Marktanforderungen zu genügen, ist es für den erfindungsgemäßen Cracker wesentlich, dass der Gesamtwassergehalt weniger als etwa 20 Gew.-%, insbesondere weniger als etwa 10 Gew.-%, gemessen nach gemessen nach § 35 Lebensmittelbedarfsgütergesetz 06.00-3 beträgt. Ganz besonders bevorzugt wird es, wenn der Gesamtwassergehalt unter etwa 6 Gew.-% liegt. Liegt der Gesamtwassergehalt über 20 Gew.-%, dann verliert sich der von einem Cracker gewünschte Eindruck der Knusprigkeit.

Darüber hinaus ist es für die Erfindung wichtig, dass der A_{w}-Wert kleiner als etwa 0,85, gemessen nach § 35 Lebensmittelbedarfsgütergesetz 06.00-2 beträgt, da dann die wünschenswerte mikrobiologische Produktstabilität gewährleistet ist. Der A_{w}-Wert beträgt vorzugsweise weniger als 0,7 und insbesondere weniger als 0,6.

Für die feste Fügung des erfindungemäßen Crackers ist es bevorzugt, wenn die Teilchen des kleinstückigen Belags aus Käse, Fleischerzeugnissen und/oder Gemüse mittels einer Bindeschicht auf der Belagseite, gebildet aus gequollenen Kohlenhydraten und/oder gequollenen Derivaten hiervon, zu einer hinlänglichen Haftung gebracht werden. Diese Bindeschicht wird nach Fertigstellung der Cracker-Basis auf deren Oberfläche aufgebracht. Es handelt sich hierbei um heiß- aber auch kaltquellende Kohlenhydrate, insbesondere Stärke. Es können auch gequollene modifizierte Stärken eingesetzt werden, die gleichermaßen wirksam sind. Darüber hinaus kommen insbesondere folgende Kohlenhydrate bzw. deren Derivate für die Zwecke der Erfindung zur Ausbildung der Bindeschicht in Betracht: wie Stärken aus Wurzel und Knollen; insbesondere Kartoffelstärke und Tapiokastärke, sowie Stärke aus Getreide, insbesondere Weizenstärke und Maisstärke. Die Bindeschicht wird im allgemeinen mit einem geeigneten Gerät, beispielsweise einem Pinsel, in dünner Schicht aus einer wässrigen Streichmasse mit einem Gehalt der gequollenen Kohlenhydrate oder deren gequollenen Derivate aufgetragen. Vorzugsweise soll die Stärke dieser Schicht nach dem Trocknen zwischen etwa 0,2 bis 1,2 mm, insbesondere zwischen etwa 0,3 bis 0,7 mm liegen.

Für den Fall, dass die kleinstückigen Teilchen des Belages der Cracker-Basis miteinander in Berührung stehen, sei es aufeinander- oder nebeneinanderliegend, ist es von Vorteil, eine verbesserte Haftung zwischen den Teilchen dadurch zu erreichen, indem ein aufgebrachtes Haftmittel für eine weitergehende Bindung sorgt. Ein Haftmittel auf der Basis eines Proteins, insbesondere von Hühnereiweiß, ist von besonderem Vorteil. Als Proteine kommen insbesondere in Frage: Weizenprotein, Erbsenprotein und/oder Sojaprotein. Von Vorteil ist es, wenn einem derartigen Haftmittel noch ein Stärkeabbauprodukt, insbesondere in Form von Maltodextrin, Dextrinen und/oder Stärkesirup, beigemischt wird. Dabei sollten auf 1 Gew.-Teil Protein etwa 0,5 bis 3 Gew.-Teile, insbesondere etwa 1 bis 2,5 Gew.-Teile Stärkeabbauprodukt entfallen. Um die wünschenswerte Struktur mit den Haftmitteln zu erhalten, werden diese der Vormischung der kleinstückigen Partikel beigemischt. Die Haftungseigenschaften treten beim abschließenden Backvorgang in Erscheinung, der nachfolgend noch erläutert werden wird.

Das fertige erfindungsgemäße Erzeugnis ist zwar für eine hinlänglich lange Zeit haltbar. Es empfiehlt sich jedoch, dieses in einer Schutzgasatmosphäre, beispielsweise aus Stickstoff, zu verpacken, so dass eine Haltbarkeit von mindestens 35 Wochen erzielbar ist. Wenn eine derartige Schutzgasatmosphäre nicht herangezogen wird, dann kann das dazu führen, dass bei der Einverleibung von Fleischerzeugnissen, insbesondere Salami, eine nachteilige Fettoxidation auftritt.

Zum optischen Eindruck des erfindungsgemäßen Crackers ist folgendes auszuführen: So liegen z.B. die Käseteilchen nicht, wie bei dem eingangs angesprochenen Handelsprodukt der Firma Wasa, "als cremige Käseschicht" vor, sondern als Käsestückchen vor. Diese wie auch die anderen kleinstückigen Teilchen, die erfindungsgemäß in Frage kommen können, zeigen eine Art "Glasur", wenn das bevorzugte Merkmal der Behandlung mit einem Haftmittel vorgenommen wird. Danach werden sie zunächst miteinander "verleimt", während bei einem nachfolgenden Backschritt eine Art "Glasur" in Erscheinung tritt, wobei die Teilchen weiterhin sichtbar bleiben und in Einzelfällen noch besser sichtbar sind.

Nachfolgend werden zwei erfindungsgemäße Cracker-Varianten detailliert dargestellt:
- Salami/Käse-Cracker (Salami herzhaft, gut ausgetrocknet; Käse naturgereift, Emmentaler/Gauda; Cracker-Gewicht 2,7 - 3,3 g/Cracker, Durchmesser 40 mm, Scheibenstärke 1,5 - 2,0 mm; Salami Gewicht 0,8 - 1,0 g/Cracker, Granulation 3 - 5 mm, Käsegewicht 0,5 - 1,0 g/Cracker, Granulation 3 - 5 mm, Teig hefegelockert, ohne chemische Triebmittel, Aussehen/Farbe runde bis leicht ovaler Cracker mit ansprechender goldbrauner, matter Gebäckfarbe, Salami leuchtend rot ohne Grauschleier, Käse weiß bis gelblich, Geschmack herzhaft würzig mit typischem Salami-Käse-Geschmack, Konsistenz knusprig, Haftung des Belags riebfest und sturzfest;
- Käse/Peperoni-Cracker (Käse naturgereifter Emmentaler/Gauda, Peperoni natürliches Aroma; Cracker-Gewicht 2,2 - 2,5 g/Cracker, Durchmesser 40 mm, Gebäckstärke 1,5-2,0 mm, Chili natürliches Aroma mit färbenden Pigmenten, Käse Gewicht 0,5 - 0,8 g/Cracker, Granulation 3 - 5 mm, Teig hefegelockert, ohne chemische Treibmittel, Aussehen/Farbe runde bis leicht ovale Cracker mit ansprechender goldbrauner matter Gebäckfarbe, Käse weiß bis gelblich mit rot-orangen Pigmenten, Geschmack herzhaft-würzig mit leichter, angenehmer Schärfe, typischer Käsegeschmack, würzig, Konsistenz knusprig, Haftung des Belags riebfest und sturzfest.

Dem Fachmann ist es ohne weiteres möglich, den erfindungsgemäßen Cracker anhand der vorstehenden Angaben herzustellen. Dennoch soll hierzu folgendes ausgeführt werden:

Gegenstand der Erfindung ist nicht nur der oben im Einzelnen beschriebene Cracker mit teilchenförmigem Belag aus Lebensmitteln, sondern auch ein zur Herstellung eines solchen Crackers besonders geeignetes Verfahren. Dieses ist dadurch gekennzeichnet, dass ein Teigling aus einem hefegelockerten Teig geformt, dieser Teigling einer Stückgare 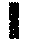 unterzogen, der gegarte Teigling gebacken, die Belagseite der erhaltenen Cracker-Basis, gegebenenfalls nach Abkühlen, mit einer Bindeschicht für einen kleinstückigen Belag aus Käse, Fleischerzeugnissen und/oder Gemüse ausgebildet, der kleinstückige Belag aufgebracht und das Zwischenerzeugnis mit einer Cracker-Basis und einem kleinstückigem Belag einer Hitzebehandlung unterzogen wird, um in dem Fertigerzeugnis den Gesamtwassergehalt auf weniger als etwa 20 Gew.-%, gemessen nach § 35 Lebensmittelbedarfsgütergesetz 06.00-3, und den A_{w}-Wert auf weniger als etwa 0,85, gemessen nach § 35 Lebensmittelbedarfsgütergesetz 06.00-2, einzustellen.

Von Vorteil hat ist es, dass der Teigling (Anfänger-Vorformling) vor der Weiterverarbeitung gelaugt wird, was beispielsweise mit niedrigkonzentrierter Natronlauge erfolgen kann. Vorzugsweise wird die Oberfläche des Teiglings vor dem Garen gelaugt.

Ein besonders vorteilhafter Cracker mit den geschilderten Eigenschaften wird erzielt, wenn der Teigling bei einer Temperatur von etwa 30 bis 40°C und/oder einer Feuchtigkeit von etwa 80 bis 95% gegart wird. Zweckmäßiger Weise erfolgt das Garen während etwa 10 bis 50 Minuten. Zur Ausbildung der angesprochenen Bindeschicht wird vorzugsweise ein Bindemittel in Form gequollener Kohlenhydrate und/oder gequollener Derivate herangezogen. Mit Vorteil wird als hefegelockerter Teig ein solcher auf Basis von Getreidemehl, insbesondere Weizenmehl, eingesetzt, insbesondere ein hefegelockerter Teig, der etwa 40 bis 65 Gew.-% Getreidemehl, etwa 0,5 bis 10 Gew.-% Hefe, etwa 5 bis 20 Gew.-% Backmargarine sowie Restwasser, Salze und Backmittel enthält.

Vorzugsweise wird die Oberfläche des Teiglings vor dem Garen gelaugt. Der gegarte Teigling wird vorzugsweise bei einer Temperatur von etwa 110 bis 160°C, insbesondere während einer Zeitdauer von etwa 10 bis 30 Minuten, gebacken. Die Hitzebehandlung zur Einstellung des gewünschten Gesamtwassergehaltes und des gewünschten A_{w}-Wertes in dem Fertigerzeugnis wird zweckmäßiger Weise zwischen etwa 100 und 120°C während etwa 20 bis 60 Minuten durchgeführt, um insbesondere den Gesamtwassergehalt auf weniger als etwa 10 Gew.-% und den A_{w}-Wert auf weniger als etwa 0,7 einzustellen.

In Einzelfällen ist es von Vorteil, wenn auf den abgekühlten Cracker bzw. das abgekühlte Fertigerzeugnis ein Haftmittel aufgebracht wird, um zwischen den aufgebrachten kleinstückigen Teilchen eine zusätzliche Bindung herzustellen und um zur optischen Verbesserung eine Glasur aufzubringen. Dieses Haftmittel ist vorzugsweise ein Protein, insbesondere in Form von Hühnereiweiß, gegebenenfalls mit einem darin zusätzlich enthaltenen Stärkeabbauprodukt, insbesondere in Form von Maltodextrin. Der kleinstückige Belag des erfindungsgemäßen Crackers liegt vorzugsweise in Form von Käse als Hartkäse, von Fleischerzeugnissen, also Rohpökelware und/oder als Dauerwurst, und von Gemüse als Pilze und/oder vorgetrocknetes Gemüse vor.

Wie ohne Weiteres ersichtlich, lassen sich im Rahmen des oben dargestellten Verfahrens gemäß der Erfindung verschiedene Einzelmerkmale verwirklichen, die im Zusammenhang mit der Beschreibung des erfindungsgemäßen Crackers vorstehend behandelt wurden.

Im Rahmen der oben vorgenommenen Darstellung des erfindungsgemäßen Verfahrens lässt sich eine vorteilhafte Ausführungsform wie folgt beschreiben: Zunächst erfolgt vorzugsweise in üblicher Weise eine Hefeteigbereitung in einem Spiralkneter. Danach schließt sich eine Teigruhe von vorzugsweise etwa 10 bis 30 Minuten, insbesondere von etwa 15 Minuten, an. Es folgt die Teigaufbereitung in Form eines Walzens, vorzugsweise eine gleichzeitige Belaugung mit niedrigkonzentrierter Natronlauge. Es wird eine Teigstärke von etwa 1,5 bis 4 mm, insbesondere etwa 2 mm hergestellt. Es schließt sich eine Stückgare an, vorzugsweise bei etwa 30 bis 40 °C, insbesondere bei etwa 35°C und etwa 80 bis 95 % Luftfeuchtigkeit, insbesondere etwa 85% Luftfeuchtigkeit, und im Verlaufe von 10 bis 50 Minuten, insbesondere etwa 15 Minuten. Danach folgt ein Backschritt I, vorzugsweise bei etwa 110 bis 160 °C, insbesondere bei etwa 130°C und etwa 10 bis 30 Minuten, insbesondere etwa 20 Minuten. Die gebildete Cracker-Basis wird dann mit einer Bindeschicht versehen, insbesondere mit einer Klebermischung. Hierbei kann beispielsweise eine Mischung gequollener Kartoffelstärke (6% und 94% Wasser) herangezogen werden. Es folgt das Aufbringen des kleinstückigen Belags aus dem Käse, Fleischerzeugnis oder Gemüse. Mit anderen Worten: es wird auf der Cracker-Basis durch Beschichten ein "Topic" ausgebildet. Es folgt ein Backschritt II, vorzugsweise bei einer Temperatur von etwa 100 bis 120 °C, insbesondere etwa 110°C, während etwa 20 bis 60 Minuten, insbesondere etwa 40 Minuten. Es schließt sich ein Kühlen auf Raumtemperatur an. Danach kann das Fertigprodukt in eine Primärverpackung überführt werden, wobei darauf geachtet werden sollte, dass der restliche Sauerstoffgehalt unter 1% liegt. Danach erfolgt eine manuelle oder auch automatische Sekundärverpackung.

Die mit der vorliegenden Erfindung verbundenen Vorteile sind vielfältig:

Es liegt ein Cracker mit einem kleinstückigen Belag vor, demzufolge kein pulvriges Material, sondern ein organoleptisch als stückiges Material wahrnehmbares Belagsmaterial. Dieses Produkt ist einfach herstellbar. Es zeigt eine wünschenswert gute Haltbarkeit. Darüber hinaus ist es geschmacklich nach den Kundenwünschen modifiziert einstellbar. Der kleinstückige Belag des erfindungsgemäßen Crackers zeigt durch die angesprochene Bindeschicht eine wünschenswert feste Haftung auf der Cracker-Basis. Durch Handhabung vor dem Verzehr können die kleinstückigen Teilchen nicht verloren gehen. Darüber hinaus ist es bei der bevorzugten Ausgestaltung der Erfindung, bei denen zusätzlich ein Haftmittel eingesetzt wird, möglich, zwischen den aufgebrachten Teilchen noch eine "innere Bindung" auszubilden. Diese hat den Vorteil, dass bei Handhabung vor dem Verzehr die kleinstückigen Teilchen nicht verloren gehen können, andererseits aber die kleinstückigen Teilchen durch eine Art "Glasur" optisch besser und schöner wahrnehmbar sind. Diese Produkt lässt sich in ausgesprochen günstiger Weise mit dem Verfahren gemäß der Erfindung, wie es vorstehend detailliert dargestellt wurde, herstellen.

Die Erfindung soll nachfolgend anhand einiger Beispiele noch näher erläutert werden, wobei die Ausbildung der Bindeschicht stets anhand einer gequollenen Stärke (6% Kartoffelstärke und 94% Wasser) vorgenommen wird.

### Beispiel 1

Zur Ausbildung des kleinstückigen Belags wurde herangezogen eine Salami/Käse-Mischung, wobei die Teilchen eine Teilchengröße von etwa 4 mm hatten:
Salami 44,0 Gew.-%, Käse 44,0 Gew.-%, Maltodextrin 4,0 Gew.-%, Hühnereiweiß 4,0 Gew.-%, Salz (Kochsalz) 1,8 Gew.-%, Gewürze (Gemisch aus Koreander, Muskat, Pfeffer) 1,0 Gew.-% und Salamiaroma 1,2 Gew.-%

Maltodextrin und Hühnereiweiß (Gewichtsverhältnis 1:1) wurden als Haftmittel eingesetzt.

Die Cracker-Basis beruhte auf folgender Rezeptur:
Weizenmehl T 550 53,0 %, Wasser 26,0 %, Hefe 4,0 %, Backmargarine 12,5 %, Salz (Kochsalz) 1,5 %, Backmittel (Lebensmittelemulgator) und 2,5 %, Rohrzucker 0,5 %.

Die Bindeschicht wurde mit gequollener Kartoffelstärke hergestellt.

### Beispiel 2

Das Beispiel 1 wurde dahingehend abgewandelt, dass anstelle der Salami/Käse-Mischung eine Käse/Peperoni-Mischung folgender Zusammensetzung herangezogen wurde:
Käse 81,0 Gew.-%, Maltodextrin 4,0 Gew.-%, Hühnereiweiß 4,0 Gew.-%, Salz (Kochsalz) 3,0 Gew.-%, Peperoni-Extrakt 2,0 Gew.-%, Gewürze (Gemisch aus Koreander, Muskat, Pfeffer) 1,0 %, Käsearoma 5,0 %.

### Beispiel 3

Das Beispiel 1 wurde dahingehend abgewandelt, dass eine Gemüse/Käse-Mischung folgender Zusammensetzung herangezogen wurde:
Käse 56,0 Gew.-%, Brokkoli 30,0 Gew.-%, Maltodextrin 4,0 Gew.-%, Hühnereiweiß 4,0 Gew.-%, Salz (Kochsalz) 1,8 Gew.-%, Gewürze (Gemisch aus Koreander, Muskat, Pfeffer) 1,0 Gew.-% und Gemüsearoma 3,2 Gew.-%.

## Patentansprüche

1. Cracker mit teilchenförmigem Belag aus Lebensmitteln, **gekennzeichnet durch**
a) eine Cracker-Basis, gebildet aus einem hefegelockerten Teig,
b) einen Gesamtwassergehalt von weniger als etwa 20 Gew.-%, insbesondere weniger als etwa 10 Gew.-%, gemessen nach § 35 Lebensmittelbedarfsgütergesetz 06.00-3,
c) einen A_{w}-Wert von kleiner als etwa 0,85, gemessen nach § 35 Lebensmittelbedarfsgütergesetz 06.00-2,
d) einen kleinstückigen Belag aus Käse, Fleischerzeugnissen und/oder Gemüse und
e) eine Bindeschicht auf der Belagseite, gebildet aus gequollenen Kohlenhydraten und/oder gequollenen Derivaten hiervon.

2. Cracker nach Anspruch 1, **dadurch gekennzeichnet, dass** der hefegelockerte Teig auf Getreidemehl, insbesondere Weizenmehl, beruht.

3. Cracker nach Anspruch 1 oder 2, **dadurch gekennzeichnet, dass** der zur Ausbildung der Cracker-Basis herangezogene hefegelockerte Teig folgende Zusammensetzung aufweist: etwa 40 bis 65 Gew.-% Getreidemehl, etwa 0,5 bis 10 Gew.-% Hefe, etwa 5 bis 20 Gew.-% Backmargarine sowie Rest Wasser, Salze und Backmittel.

4. Cracker nach Anspruch 3, **dadurch gekennzeichnet, dass** das der zur Ausbildung der Cracker-Basis herangezogene hefegelockerte Teig folgende Zusammensetzung aufweist: etwa 45 bis 60 Gew.-%, insbesondere etwa 47 bis 53 Gew.-% Getreidemehl, etwa 2 bis 8 Gew.-%, insbesondere 3 bis 5 Gew.-% Hefe, etwa 7 bis 18 Gew.-%, insbesondere etwa 9 bis 14 Gew.-% Backmargarine.

5. Cracker nach einem der Ansprüche 1 bis 4, **dadurch gekennzeichnet, dass** die Cracker-Basis eine Stärke von etwa 1 bis 8 mm, insbesondere von etwa 2 bis 5 mm aufweist.

6. Cracker nach mindestens einem der vorhergehenden Ansprüche, **dadurch gekennzeichnet, dass** die Cracker-Basis oberflächlich gelaugt ist.

7. Cracker nach mindestens einem der vorhergehenden Ansprüche, **dadurch gekennzeichnet, dass** sein Gesamtwassergehalt weniger als etwa 6 Gew.-% beträgt.

8. Cracker nach mindestens einem der vorhergehenden Ansprüche, **dadurch gekennzeichnet, dass** der A_{w}-Wert kleiner als etwa 0,7, insbesondere kleiner als etwa 0,6 ist.

9. Cracker nach mindestens einem der vorhergehenden Ansprüche, **dadurch gekennzeichnet, dass** der kleinstückige Belag in Form von Käse als Hartkäse, von Fleischerzeugnissen als Rohpökelware und/oder als Dauerwurst und von Gemüse als Pilze und/oder vorgetrocknetes Gemüse vorliegt.

10. Cracker nach Anspruch 9, **dadurch gekennzeichnet, dass** das vorgetrocknete Gemüse in Form von Wurzelgemüse, Knollengemüse, Blattgemüse, Stengelgemüse und/oder Fruchtgemüse vorliegt.

11. Cracker nach Anspruch 9, **dadurch gekennzeichnet, dass** die Pilze in Form von Champignons vorliegen.

12. Cracker nach mindestens einem der vorhergehenden Ansprüche, **dadurch gekennzeichnet, dass** die Teilchengröße des kleinstückigen Belags etwa 1 bis 10 mm, insbesondere etwa 3 bis 7 mm beträgt.

13. Cracker nach mindestens einem der vorhergehenden Ansprüche, **dadurch gekennzeichnet, dass** der kleinstückige Belag in einer Menge von etwa 0,2 bis 6 g/cm², insbesondere 0,3 bis 4 g/cm² vorliegt.

14. Cracker nach mindestens einem der vorhergehenden Ansprüche, **dadurch gekennzeichnet, dass** der kleinstückige Belag im wesentlichen aus einer Mischung von Käse- und Fleischerzeugnissen, insbesondere in Form von Salami- und/oder Schinkenstücken, besteht.

15. Cracker nach Anspruch 14, **dadurch gekennzeichnet, dass** auf 1 Gew.Teil Käse etwa 0,5 bis 1,5 Gew.Teile Fleischerzeugnisse entfallen.

16. Cracker nach mindestens einem der vorhergehenden Ansprüche, **dadurch gekennzeichnet, dass** der kleinstückige Belag und/oder die Cracker-Basis gewürzt sind.

17. Cracker nach Anspruch 16, **dadurch gekennzeichnet, dass** der kleinstückige Belag und/oder die Cracker-Basis mit Muskat, Knoblauch, Pfeffer, Koreander, Paprikapulver und/oder Rosmarinextrakt gewürzt sind, insbesondere zur Einstellung eines herzhaften Geschmacks.

18. Cracker nach mindestens einem der vorhergehenden Ansprüche, **dadurch gekennzeichnet, dass** die Teilchen des kleinstückigen Belags, sofern sie miteinander in Berührung stehen, über ein Haftmittel verbunden sind.

19. Cracker nach Anspruch 18, **dadurch gekennzeichnet, dass** das Haftmittel ein Protein, insbesondere in Form von Hühnereiweiß, enthält.

20. Cracker nach Anspruch 19, **dadurch gekennzeichnet, dass** das Haftmittel zusätzlich ein Stärkeabbauprodukt, insbesondere in Form von Maltodextrin, enthält.

21. Verfahren zur Herstellung eines Crackers mit einem teilchenförmigen Belag aus Lebensmitteln, insbesondere zur Herstellung eines Crackers nach mindestens einem der vorhergehenden Ansprüche, **dadurch gekennzeichnet, dass** ein Teigling aus einem hefegelockerten Teig geformt, dieser Teigling einer Stückgare 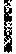 unterzogen, der gegarte Teigling gebacken, die Belagseite der erhaltenen Cracker-Basis, gegebenenfalls nach Abkühlen, mit einer Bindeschicht für einen kleinstückigen Belag aus Käse, Fleischerzeugnissen und/oder Gemüse ausgebildet, der kleinstückige Belag aufgebracht und das Zwischenerzeugnis mit einer Cracker-Basis und einem kleinstückigem Belag einer Hitzebehandlung unterzogen wird, um in dem Fertigerzeugnis den Gesamtwassergehalt auf weniger als etwa 20 Gew.-%, gemessen nach § 35 Lebensmittelbedarfsgütergesetz 06.00-3, und den A_{w}-Wert auf weniger als etwa 0,85, gemessen nach § 35 Lebensmittelbedarfsgütergesetz 06.00-2, einzustellen.

22. Verfahren nach Anspruch 21, **dadurch gekennzeichnet, dass** der Teigling vor Weiterverarbeitung gelaugt wird.

23. Verfahren nach Anspruch 21 oder 22, **dadurch gekennzeichnet, dass** der Teigling bei einer Temperatur von etwa 30 bis 40°C und/oder bei einer Luftfeuchtigkeit von etwa 80 bis 95% gegart wird.

24. Verfahren nach einem der Ansprüche 21 bis 23, **dadurch gekennzeichnet, dass** der Teigling etwa 10 bis 50 Minuten lang gegart wird.

25. Verfahren nach einem der Ansprüche 21 bis 24, **dadurch gekennzeichnet, dass** zur Ausbildung der Bindeschicht ein Bindemittel in Form gequollener Kohlenhydrate und/oder gequollener Derivate hiervon ausgebildet wird.

26. Verfahren nach einem der Ansprüche 21 bis 25, **dadurch gekennzeichnet, dass** als hefegelockerter Teig ein auf Getreidemehl, insbesondere Weizenmehl, beruhender Teig herangezogen wird.

27. Verfahren nach Anspruch 26, **dadurch gekennzeichnet, dass** der zur Ausbildung der Cracker-Basis herangezogene hefegelockerte Teig etwa 40 bis 65 Gew.-% Getreidemehl, etwa 0,5 bis 10 Gew.-% Hefe, etwa 5 bis 20 Gew.-% Backmargarine sowie Rest Wasser, Salze und Backmittel enthält.

28. Verfahren nach mindestens einem der Ansprüche 21 bis 27, **dadurch gekennzeichnet, dass** die Oberfläche des Teiglings vor dem Garen gelaugt wird, insbesondere mit niedrig konzentrierter Natronlauge.

29. Verfahren nach mindestens einem der Ansprüche 21 bis 28, **dadurch gekennzeichnet, dass** der gegarte Teigling bei einer Temperatur von etwa 110 bis 160°C gebacken wird.

30. Verfahren nach mindestens einem der Ansprüche 21 bis 29, **dadurch gekennzeichnet, dass** der gegarte Teigling etwa 10 bis 30 Minuten lang gebacken wird.

31. Verfahren nach mindestens einem der Ansprüche 21 bis 30, **dadurch gekennzeichnet, dass** die Hitzebehandlung zur Einstellung des gewünschten Gesamtwassergehaltes und des gewünschten A_{w}-Wertes zwischen etwa 100 und 120°C sowie etwa 20-60 Minuten lang durchgeführt wird.

32. Verfahren nach mindestens einem der Ansprüche 21 bis 31, **dadurch gekennzeichnet, dass** auf den abgekühlten Cracker ein Haftmittel aufgebracht wird, um zwischen den aufgebrachten kleinstückigen Teilchen eine zusätzliche Bindung herzustellen und eine Glasur zur optischen Verbesserung aufzubringen.

33. Verfahren nach Anspruch 32, **dadurch gekennzeichnet, dass** ein Haftmittel in Form eines Proteins, insbesondere in Form von Hühnereiweiß, gegebenenfalls zusätzlich mit einem Stärkeabbauprodukt, insbesondere in Form von Maltodextrin, aufgebracht wird.

34. Verfahren nach mindestens einem der Ansprüche 21 bis 32, **dadurch gekennzeichnet, dass** der Gesamtwassergehalt auf weniger als etwa 10 Gew.-% und der A_{w}-Wert auf weniger als etwa 0,7 eingestellt wird.

35. Verfahren nach mindestens einem der Ansprüche 21 bis 34, **dadurch gekennzeichnet, dass** der kleinstückige Belag in Form von Käse als Hartkäse, von Fleischerzeugnissen als Rohpökelware und/oder als Dauerwurst und von Gemüse als Pilze und/oder vorgetrocknetes Gemüse herangezogen wird.
